# EUROPEAN PATENT APPLICATION

(11) **EP 2 398 248 A2**
(43) Date of publication of application: **21.12.2011**
(21) Application number: 11162373.2
(22) Date of filing: 14.04.2011
(51) Int. Cl.: H04N 13/04

(54) **Three dimensional image display device and a method of driving the same**

(30) Priority: 20.05.2010 KR 20100047732
(71) Applicant: SAMSUNG ELECTRONICS CO., LTD., Yeongtong-gu Suwon-city Gyeonggi-do 442-742 (KR)
(72) Inventor: Yoon, Won-Gap, Gyeonggi-do (KR); Jung, Jae Woo, Chungcheongnam-do (KR); Kim, Bo-Ram, Chungcheongnam-do (KR)
(74) Representative: Weitzel, Wolfgang

(57) **Abstract**

A three dimensional (3D) image display device including a display unit receiving a time-division configured 3D image, the time division configured 3D image including a plurality of two-dimensional (2D) images spaced apart over time; and a synchronization unit identifying first images in the plurality of 2D images to be viewed with a first viewer and second images in the plurality of 2D images to be viewed with a second viewer, and generating a synchronization signal based on the first and second images, wherein the display unit displays the plurality of 2D images on a full screen of the display unit.

## Description

### BACKGROUND OF THE INVENTION

### Technical Field

The present invention relates to a three dimensional image display device and a method of driving the same.

### Discussion of the Related Art

In general, a three dimensional image display technique allows a viewer to feel the depth (e.g., a three dimensional effect) of an object by using binocular parallax. Binocular parallax may exist due to the eyes of a person being spaced from each other by a predetermined distance, and thus, a two dimensional image seen in a left eye is different from that seen in a right eye. The person's brain blends the two different two dimensional images together to generate a three dimensional image that is a perspective and realistic representation of an object being viewed.

Techniques for displaying three dimensional images, which use the binocular parallax, may be classified into a stereoscopic method and an autostereoscopic method. The stereoscopic method uses glasses including shutter glasses, polarized glasses, etc. and the autostereoscopic method involves installing a lenticular lens, a parallax barrier, etc. in a display device without using glasses.

The stereoscopic shutter glass method is a method in which an image to be seen in the left eye and an image to be seen in the right eye image are separated and continuously outputted by a three dimensional image display device to a pair of shutter glasses and a left eye shutter and a right eye shutter of the shutter glasses are selectively opened and closed to display a three dimensional image.

In the case of a game which two persons play, when a display device expresses a three dimensional effect as well as expresses a visual point of each person through a screen partitioning method, a three dimensional image viewed by each person wearing shutter glasses may not be enough to give the person full visual immersion in the game. Further, the images of the visual points may interfere with each other and cause crosstalk.

### SUMMARY OF THE INVENTION

A three dimensional (3D) image displaying device and method according to an exemplary embodiment of the present invention is provided that allows each player of a game to feel the 3D effect in a full screen by using one 3D display to maximize visual immersion. The device and a method for displaying a 3D image according to an exemplary embodiment of the present invention may be able to display a high-quality moving picture, reproduce 3D content, and enable a plurality of users to play a game all at once by using only one display panel (alternately, screen). Further, in an exemplary embodiment of the present invention, a multi view may be enabled by using one display, and thus, a plurality of users (e.g., two or more) may enjoy different images (two dimensional (2D) or 3D images) through one full screen by using a high-speed driving panel such as a 240 Hz panel or a 480 Hz panel in conjunction with individual pairs of shutter glasses using shutter glass-type 3D technology. In other words, each player can view a different image specific to their game experience on the same screen as the others. As a result, spatial utilization is maximized by utilizing a high-speed driving panel, and is done so without adding much cost.

Further, the high-speed (120 Hz, 240 Hz, 480 Hz or more) panel can correct a current moving picture echo phenomenon and can reproduce the 3D image (of the shutter glass-type 3D technology). A device and a method for displaying a 3D image according to an exemplary embodiment of the present invention may include a synchronization unit for generating a synchronization signal by distinguishing a time-division configured 3D image including two or more 3D contents in a 3D display and transmitting the synchronization signal to a 3D viewer, and the 3D viewer may allow only the 3D image synchronized for viewing by a particular person to be viewed by that person in response to receiving the synchronization signal generated by the synchronization unit.

In a device and method for displaying a 3D image according to an exemplary embodiment of the present invention, the number of images and a combination of the images making up the time-division configured 3D image may be determined within a predetermined time.

In a device and method for displaying a 3D image according to an exemplary embodiment of the present invention, a format of the time-division configured 3D image may be distinguished by the synchronization unit.

In a device and method for displaying a 3D image according to an exemplary embodiment of the present invention, the synchronization signal may be generated by considering characteristics impacting a 3D image's quality such as luminance, crosstalk, and the like of the 3D display and characteristics of a system circuit for the same at the time of generating the synchronization signal.

In a device and method for displaying a 3D image according to an exemplary embodiment of the present invention, a signal of a 3D image input device (TV, Blu-ray disk, or the like) may be recognized and the time-division configured 3D image may be configured accordingly.

In a device and method for displaying a 3D image according to an exemplary embodiment of the present invention, two, four, or more persons may view different images through one full screen (one display device) at once.

In a device and method for displaying a 3D image according to an exemplary embodiment of the present invention, four images may concurrently be viewed on one full screen by dividing one image into 120 Hz on the basis of a 480 Hz panel and eight images may concurrently be viewed on one full screen by dividing one image into 60 Hz on the basis of a 480 Hz panel if crosstalk is rare.

In a device and method for displaying a 3D image according to an exemplary embodiment of the present invention, two 3D images may concurrently be viewed on one full screen by using a high-speed driving panel such as the 480 Hz panel.

A device and method for displaying a 3D image according to an exemplary embodiment of the present invention may be applied to a monitor application and mobile electronics such as a notebook.

In a device and method for displaying a 3D image according to an exemplary embodiment of the present invention, different 60 Hz images may concurrently be viewed on one full screen on the basis of a 120Hz panel.

In a device and method for displaying a 3D image according to an exemplary embodiment of the present invention, in a pair of shutter glasses, according to an exemplary embodiment of the present invention, both a left-eye shutter and a right-eye shutter may be simultaneously opened or closed.

In a device and method for displaying a 3D image according to an exemplary embodiment of the present invention, a plurality of spectacles (also referred to as shutter glasses) may independently be controlled by using a synchronization pulse signal.

In a device and method for displaying a 3D image according to an exemplary embodiment of the present invention, the shutter glasses may include an image selection function and may include an earphone to hear sound of the corresponding image.

In a device and method for displaying a 3D image according to an exemplary embodiment of the present invention, multiple functions may be implemented by utilizing a display which may drive a 3D screen in a shutter glass scheme.

In a device and method for displaying a 3D image according to an exemplary embodiment of the present invention, a high frequency of 60 Hz or more may be used regardless of a display scheme. For example, the high frequency may include 120Hz, 180Hz, 240Hz, and the like.

In a device and method for displaying a 3D image according to an exemplary embodiment of the present invention, a multiple purpose use is available by switching a mode into various modes such as 2D, 3D, 2D veil view, 3D veil view, 2D multi view or 3D multi view.

In a device and method for displaying a 3D image according to an exemplary embodiment of the present invention, the veil view may be implemented by adding a complementary color of an image which a user intends to view and other dummy images and by opening a shutter or shutters of the shutter glasses only in a frame of the image which the user intends to view.

In a device and method for displaying a 3D image according to an exemplary embodiment of the present invention, the multi view may be implemented by opening a shutter or shutters of multiple users' shutter glasses in only frames of a broadcast which the users want to view.

The above exemplary embodiments of the present invention provide a method that can maximize the immersion of two or more persons playing a game using the 3D display. This is so, because a 3D image suitable for each person who plays the game may be provided to each person individually and differentiation may be achieved in the 3D display, thereby improving immersion in an interactive game.

In an exemplary embodiment of the present invention, multiple users may enjoy different images on one full screen due to the exemplary manner of controlling of the shutter glasses in a shutter glass type 3D and the 240 Hz or 480 Hz (or more) panel. In other words, a couple of 2D contents may be displayed in each optional frame of the high-speed panel with the shutter glass driving scheme of an exemplary embodiment of the present invention instead of the left-eye image or the right-eye image. One of the 2D contents may be viewed by simultaneously opening the left eye shutter and the right eye shutter of a predetermined shutter glass synchronized with the corresponding 2D content in synchronization with a shutter open synchronization signal. When a frame of the corresponding 2D content is finished, other 2D contents may not be viewed by simultaneously closing the left eye shutter and the right eye shutter of the predetermined shutter glass in synchronization with a shutter close synchronization signal. For example, two different 2D contents are displayed every 120 Hz (rather than a 60 Hz image display + black data) in the 240 Hz panel, and a predetermined infrared synchronization signal depending on the corresponding 2D content is sent to a shutter glass which may, in response to the predetermined infrared synchronization signal, control the shutter glass to open and close both its left and right shutters at the same time. Accordingly, two 2D contents may be viewed by different viewers through one full screen for a common time period. Similarly, in the 480 Hz panel, at least four viewers may view four 2D contents on one full screen nearly at the same time, and further, additional viewers may view five or more 2D contents on one full screen nearly at the same time in a high-speed driving display scheme. Further, two 3D contents may be viewed for a common time period by using the 240 Hz 3D driving scheme.

In an exemplary embodiment of the present invention, a 3D image display device may comprise: a display unit receiving a time-division configured 3D image, the time division configured 3D image including a plurality of 2D images spaced apart over time; and a synchronization unit identifying first images in the plurality of 2D images to be viewed with a first viewer and second images in the plurality of 2D images to be viewed with a second viewer, and generating a synchronization signal based on the first and second images, wherein the display unit displays the plurality of 2D images on a full screen of the display unit.

The first and second images may each comprise a left-eye image and a right-eye image constituting a 3D image when viewed with their respective viewer and the synchronization signal is generated based on the left-eye image and the right-eye image.

The time-division configured 3D image may comprise a complementary color image or a dummy image corresponding to at least one of the plurality of images.

The device may further comprise first and second shutter members, wherein the synchronization unit transmits the synchronization signal to the shutter members.

At least one of the shutter members may comprise a left-eye shutter and a right-eye shutter, and the synchronization signal is generated to simultaneously close both the left-eye shutter and the right-eye shutter when the complementary color image or the dummy image is displayed on the full screen of the display unit.

The device may further comprise first and second shutter members, wherein the synchronization unit transmits the synchronization signal to the shutter members.

At least one of the shutter members may comprise a left-eye shutter and a right-eye shutter and the synchronization signal is generated to open any one of the left-eye shutter and the right-eye shutter and close the other one.

The at least one shutter member may comprise at least one of an earphone and a switch selecting the first images or second images for viewing.

At least one of the shutter members may comprise a left-eye shutter and a right-eye shutter and the synchronization signal is generated to simultaneously open both the left-eye shutter and the right-eye shutter or to simultaneously close both the left-eye shutter and the right-eye shutter.

The shutter member may be a left-eye and right-eye integrated pair of glasses.

The at least one shutter member may comprise at least one of an earphone and a switch selecting the first image or second images for viewing.

In an exemplary embodiment of the present invention, a 3D image display device may comprise: a display unit displaying 2D video content or 3D video content, each of the video contents comprising a plurality of images; and a synchronization unit distinguishing images of the video contents from each other based on a configuration of the video content and generating a synchronization signal on the basis of this distinction, wherein each of the video contents comprises a complementary color image or a dummy image corresponding to one of the plurality of images.

The synchronization unit may transmit the synchronization signal to two or more shutter members.

At least one of the shutter members may comprise a left-eye shutter and a right-eye shutter and the synchronization signal is generated to simlutaneously close both the left-eye shutter and the right-eye shutter when the complementary color image or the dummy image is displayed on the display unit.

In an exemplary embodiment of the present invention, a method for driving a 3D image display device may comprise: time-dividing 2D video content and 3D video content such that images of the 2D video content are divided over a predetermined time and images of the 3D video content are divided over the predetermined time; identifying images of the 2D video content to be viewed by a first viewer and images of the 2D video content to be viewed by a second viewer; identifying images of the 3D video content to be viewed by the first viewer and images of the 3D video content to be viewed by the second viewer; generating a synchronization signal based on the identitified images; and alternately displaying the identified images on a full screen of a display device.

The method may further comprise transmitting the synchronization signal to two or more shutter members.

The method may further comprise operating each shutter member according to the synchronization signal.

In an exemplary embodiment of the present invention, a method for driving a 3D image display device may comprise: receiving, at a receiving device, a plurality of compressed camera images, each image having been taken from a different viewpoint; uncompressing, at the receiving device, the camera images and identifying the viewpoint corresponding to each of the camera images; generating, at the receiving device, a signal based on the identified viewpoints and transmitting the signal to first and second viewing devices; viewing, at the first viewing device, the camera images taken from a first viewpoint; and viewing, at the second viewing device, the camera images taken from a second different, wherein the camera images viewed at the first and second viewing devices are viewed at the same time by a person on a full screen of a display device.

The compressed camera images may be received in a wired or wireless fashion.

### BRIEF DESCRIPTION OF THE DRAWINGS

FIG. 1 is a block diagram of a time-division configured three dimensional (3D) image display device according to an exemplary embodiment of the present invention.
FIG. 2 is a diagram showing a time-division configured 3D image application according to an exemplary embodiment of the present invention.
FIG. 3 is a diagram showing a time-division configured 3D image application according to an exemplary embodiment of the present invention.
FIG. 4 is a block diagram of a synchronization unit of FIG. 1, according to an exemplary embodiment of the present invention.
FIG. 5 is a diagram illustrating the time-division configured image of FIG. 2(a) and images viewed in each of a pair of 3D viewers, according to an exemplary embodiment of the present invention.
FIG. 6 is a diagram illustrating the time-division configured image of FIG. 3 and images viewed in each of a pair of 3D viewers, according to an exemplary embodiment of the present invention.
FIG. 7 is a diagram illustrating a time division configured 3D image and images viewed in each of three 3D viewers, according to an exemplary embodiment of the present invention.
FIG. 8 is a diagram illustrating a time-division scheme and an operation scheme of shutter glasses according to an exemplary embodiment of the present invention.
FIG. 9(a) is a diagram showing an operation of existing shutter glasses and FIG. 9(b) is a diagram showing an operation of shutter glasses according to an exemplary embodiment of the present invention.
FIG. 10 is a diagram showing a scheme of time-dividing four images and an operation scheme of shutter glasses using a driving panel operating at 480 Hz.
FIG. 11 is a diagram showing a scheme of time-dividing two images and an operation scheme of shutter glasses according to an exemplary embodiment of the present invention.
FIG. 12 is a diagram showing a scheme of time-dividing 3D contents and an operation scheme of shutter glasses using a driving panel operating at 480 Hz.
FIG. 13 is a diagram showing a time-division scheme and an operation scheme of shutter glasses according to an exemplary embodiment of the present invention.
FIG. 14 is a diagram showing a time-division scheme and an operation scheme of shutter glasses according to an exemplary embodiment of the present invention.
FIG. 15 is a diagram showing shutter glasses according to exemplary embodiments of the present invention.
FIG. 16 is a diagram showing shutter glasses according to exemplary embodiments of the present invention.
FIG. 17 is a diagram showing an operation scheme of a multi view using a 3D panel according to an exemplary embodiment of the present invention.
FIG. 18 is a diagram showing an operation scheme of a veil view using a 3D panel according to an exemplary embodiment of the present invention.
FIG. 19 is a diagram showing an operation scheme of a veil view using a 3D panel according to an exemplary embodiment of the present invention.
FIG. 20 is a diagram showing a 3D operation scheme of a veil view using a 3D panel according to an exemplary embodiment of the present invention.
FIG. 21 is a diagram showing that a display device according to an exemplary embodiment of the present invention is switchable to various modes.
FIG. 22 is a diagram showing an example of a service using a display device according to an exemplary embodiment of the present invention.
FIG. 23 is a diagram showing an operation of a 3D image display device according to an exemplary embodiment of the present invention.
FIG. 24 is a block diagram showing a 3D image display device according to an exemplary embodiment of the present invention.
FIG. 25 is a graph showing a signal waveform of a 3D image display device according to an exemplary embodiment of the present invention.
FIG. 26 is a graph showing a signal waveform of a 3D image display device according to an exemplary embodiment of the present invention.

### DETAILED DESCRIPTION OF EXEMPLARY EMBODIMENTS

Exemplary embodiments of the present invention will be described more fully hereinafter with reference to the accompanying drawings. However, the present invention may be embodied in various different ways and should not be construed as limited to the exemplary embodiments decribed herein. Like reference numerals may designate like elements throughout the specification and drawings.

In the drawings, the thickness of layers, films, panels, regions, etc., may be exaggerated for clarity. It will be understood that when an element such as a layer, film, region, or substrate is referred to as being "on' another element, it may be directly on the other element or intervening elements may also be present.

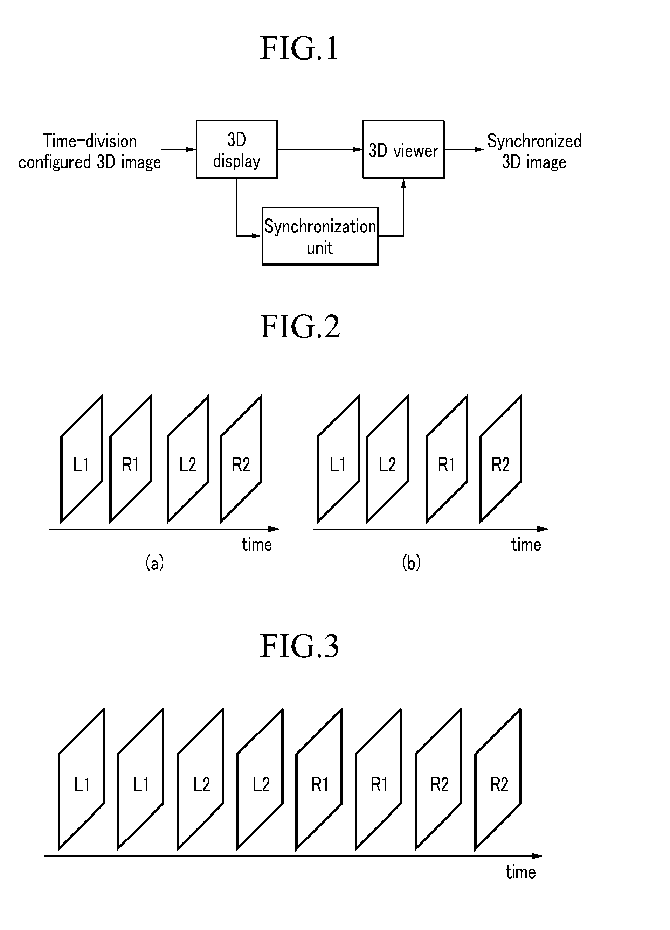

As shown in FIG. 1, a three dimensional (3D) image display device according to an exemplary embodiment of the present invention may include, in the case of a game which two or more persons play together, a time-division configuration of 3D images suitable for a visual point of each person, a synchronization unit for generating a synchronization signal by distinguishing the time-division configured 3D images and transmitting the synchronization signal to a 3D viewer, such that the 3D viewer may allow the 3D images which are meant for each person to be viewed only by that person using the synchronization signal.

The time-division configured 3D image of FIG. 1 is acquired by combining 3D images to be displayed with each other on a time axis. For example, the time-division configured 3D image of FIG. 1, which is to be displayed to two persons, may be a 3D image in which two kinds of 3D images are appropriately combined in sequence to allow the viewers to view only 3D images synchronized through a synchronization signal. Herein, the combination of the 3D images in the appropriate sequence may mean the combination of enough of the 3D images to enable viewing by both viewers. In the case where two or more persons view 3D images, each person may view their own image without viewing images of the other persons. FIG. 2 is an example of the application of a time-division configured 3D image.

In FIG. 2, L represents a left image, R represents a right image, and numbers 1 and 2 represent index information regarding the viewer. In other words, a 3D image constituted by L1 and R1 is sent to an eye of viewer 1 and a 3D image constituted by L2 and R2 is sent to an eye of viewer 2 within a predetermined time. FIGS. 2(a) and 2(b) are examples of this. Almost any combination of images may be a valid combination of the images. Further, the number of images is not limited. The number of images may be increased as long as a system permits. FIG. 3 is an example in which the number of images of FIG. 2(b) is increased.

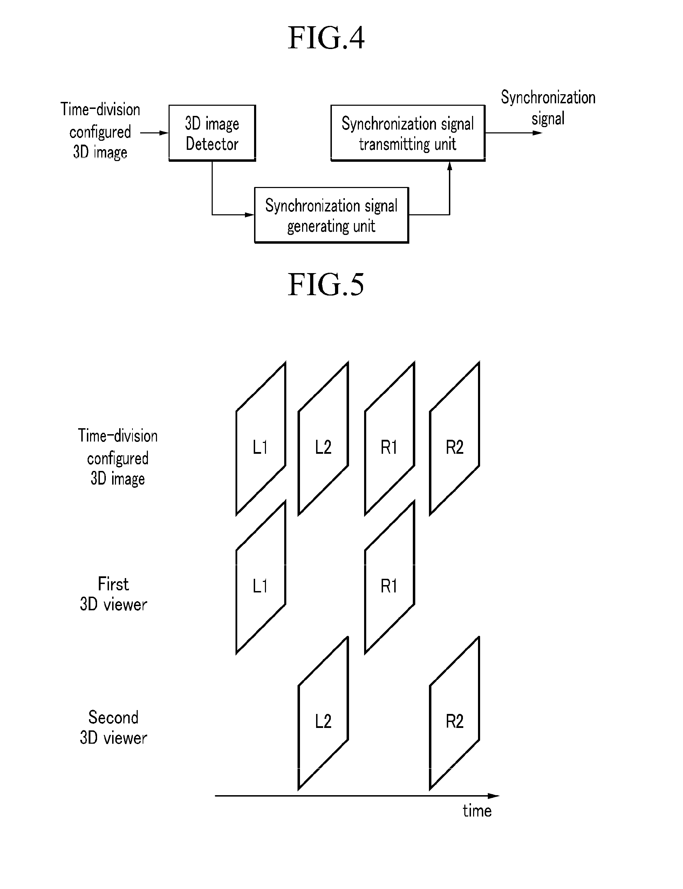

FIGS. 2 and 3 are time-division configurations of images to be displayed in 3D to two viewers within a predetermined time, according to exemplary embodiments of the present invention. Herein, the predetermined time is determined by a source image. For example, if the source image is a 60 Hz image, the predetermined time of FIGS. 2 and 5 is 1/60 sec. In the case of FIG. 2, since four images may be displayed within 1/60 sec., a 240 Hz system is configured from this display viewpoint and in the case of FIG. 3, since eight images may be displayed within 1/60 sec., a 480 Hz system is configured from this display viewpoint.

The synchronization unit of FIG. 1 as one function block of the 3D image display device serves to generate a synchronization signal by distinguishing the time-division configured 3D images inputted into the 3D display and transmit the generated synchronization signal to a 3D viewer. FIG. 4 is a block diagram of the synchronization unit of FIG. 1, according to an exemplary embodiment of the present invention.

The time-division configured 3D image of FIG. 1 is determined depending on each system. The 3D image may directly be received through a broadcast or package media, or the 3D image may be received through devices (e.g., a two dimensional (2D) to 3D conversion device, a frame rate conversion device, and the like) in a 3D image display system.

In the case of a 3D digital broadcast, two decoders may be required to view two channels in one display. A current broadcasting system is adopting MPEG2-TS. If the 3D broadcast also adopts the current system, it sends 3D contents loaded on the MPEG2-TS. In both the case in which a bit stream of 3D content is sent using MPEG2 and the case in which a bit stream of 3D content is sent using the MPEG2 and other codices, two elementary streams may be defined in one program to distinguish a left eye image and a right eye image from each other. In this case, a hierarchy descriptor may be used. Information regarding the hierarchy descriptor used to distinguish the left image and the right image from each other is used in a synchronization signal generating unit of FIG. 4 to generate the synchronization signal. Further, the synchronization signal generating unit may generate the synchronization signal as well as distinguish channels by using a program identifier (ID) value and timing information of the system.

Further, when two different MPEG2-TSs are inputted, one program is provided in each MPEG2-TS. Therefore, in this case, hierarch descriptor information for the two MPEG2-TSs, a program ID value, and system timing information for synchronization between elementary streams in the programs of two MPEG2-TS may be required.

For the purpose of distinction and control between the elementary streams, another descriptor other than the hierarchy descriptor may be defined and used.

Package media such as a blu-ray disk may generate the synchronization signal by using ID descriptor information of contents such as an MPEG2-TS program of the broadcast, descriptor information for distinguishing the left eye image and the right eye image from each other, and system timing information to reproduce the two 3D contents.

In the case of a 3D game which two persons play together, in the above scheme, a graphics engine serves as a decoder and the synchronization signal may be generated by using the ID descriptor information of the contents, the descriptor information for distinguishing the left eye image and the right eye image from each other, and the system timing information. In a game involving interaction, since the graphics engine generates new 3D contents in real time depending on a user's reaction, it enables an immersive 3D game.

In any type of 3D image, a configuration protocol for the time-division configured 3D image may be shared with a 3D image detector of FIG. 4 and the synchronization signal is generated based on the protocol. Herein, the above-mentioned protocol may include a configuration method for a time axis like the examples shown in FIGS. 2 and 3 and may also include schemes of the 3D image (e.g., side-by-side, top-bottom, frame packing, frame sequential, and the like).

The synchronization signal generating unit of FIG. 4 generates a synchronization signal with the 3D display and the 3D viewer of FIG. 1 by using the configuration protocol for the time-division configured 3D image.

The synchronization signal is generated by considering characteristics of the system. Herein, the characteristics of the system may include characteristics affecting a 3D image's quality such as luminance, crosstalk, and the like of the 3D display, characteristics of a system circuit for the same, and the like. A synchronization signal transmitting unit of FIG. 4 transmits the synchronization signal generated by the synchronization signal generating unit to the 3D viewer of FIG. 1 to allow the viewer to view a desired 3D image. The transmission method may include both wired and wireless methods. An example of the transmission includes an infrared wireless communication transmitting the synchronization signal to active shutter glasses.

The 3D viewer of FIG. 1 operates to be synchronized with the synchronization signal transmitted from the synchronization unit to select only a synchronized image among the 3D images reproduced in the 3D display and allow the user to view the corresponding image. As the 3D viewer, diversified devices which may give immersion may be used. For example, the 3D viewer may include the active shutter glasses or a head-mounted display.

As one example of the system of FIG. 1, in the case in which the time-division configured 3D image is inputted as shown in FIG. 2B, only a 3D image synchronized to each of two 3D viewers is viewed as shown in FIG. 5, according to an exemplary embodiment of the present invention.

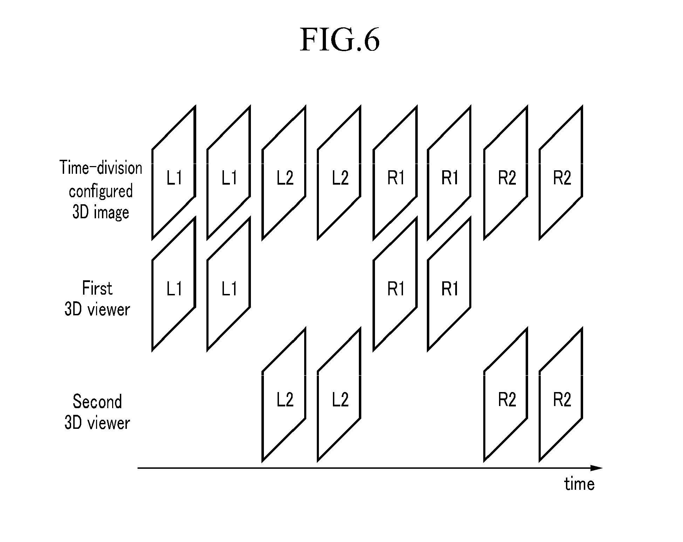

As one example of the system of FIG. 1, in the case in which the time-division configured 3D image is inputted as shown in FIG. 3, only a 3D image synchronized to each of two 3D viewers is viewed as shown in FIG. 6, according to an exemplary embodiment of the present invention.

In this case, the input images inputted into the 3D display may be inputted in an order shown in FIG. 6. A first user views 3D images in synchronization with image information of L1, L1, R1, R1, etc. and a second viewer views different 3D images in synchronization with image information of L2, L2, R2, R2, etc. Further, other images may be inserted among the arranged images, but an additional image may be inserted to prevent the image quality from degrading when each user views the 3D images. Further, the input images may be converted into other data through the 3D display to improve their image quality and remove crosstalk.

An example of a display having such a system includes a two-player 3D display for a 3D game. Another example of a display may include a display used in a 3D multichannel broadcast. In this case, the 3D viewer of FIG. 1 does not view its own view of the same content but views another 3D channel. In other words, indexes 1 and 2 of FIG. 2 may be channel numbers.

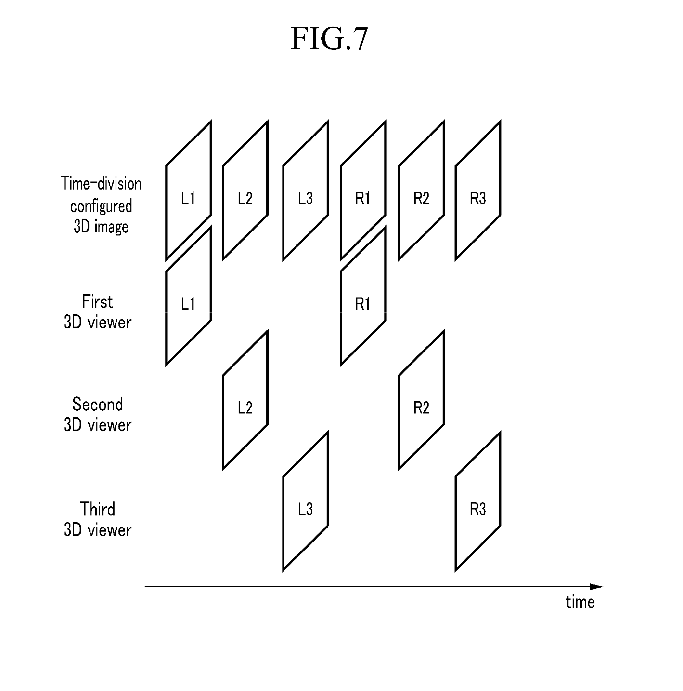

Another example is the extension from the 3D display which two persons play together to a 3D display which three or more persons play together. When two persons are extended to three persons, FIG. 5 is changed to FIG. 7, in accordance with an exemplary embodiment of the present invention.

A device and a method for displaying a 3D image according to an exemplary embodiment of the present invention may display two or more 2D contents or 3D contents on one full screen through one high-speed driving panel and multiple (two or more) shutter members.

A device and method for displaying a 3D image according to an exemplary embodiment of the present invention may control shutter glasses so that a left eye and a right eye of shutter glasses synchronized with one type of content are opened and closed concurrently and when one content type is displayed, both eyes are opened concurrently and when another content type is displayed, both eyes are closed concurrently.

A device and method for displaying a 3D image according to an exemplary embodiment of the present invention generates a synchronization signal pulse for controlling the shutter glasses synchronized with the corresponding image to independently control each shutter glass.

A device and method for displaying a 3D image according to an exemplary embodiment of the present invention may allow two or more persons to view different 2D images through a full screen of one panel depending on the control of the shutter glasses by displaying different 2D contents every 60 Hz using a high-speed driving panel operating at 120 Hz or more for a common time period.

A device and method for displaying a 3D image according to an exemplary embodiment of the present invention may allow two or more persons to view different 2D images through a full screen of one panel depending on the control of the shutter glasses by displaying different 2D contents every 120 Hz using a high-speed driving panel operating at 240 Hz or more for a common time period.

A device and method for displaying a 3D image according to an exemplary embodiment of the present invention may allow two or more persons to view different 2D images or 3D images through a full screen of one panel depending on the control of the shutter glasses by displaying different 2D contents or 3D contents every 120 Hz using a high-speed driving panel operating at 480 Hz or more for a common time period. A device and method for displaying a 3D image according to an exemplary embodiment of the present invention may control both the left eye and right eye images while the left eye and the right eye of the shutter glasses are separated from each other and control left eye and right eye integrated glasses.

A device and method for displaying a 3D image according to an exemplary embodiment of the present invention may embed a switch in the shutter glasses for selecting an image and embed an earphone in the shutter glasses for listening to sound of the corresponding image.

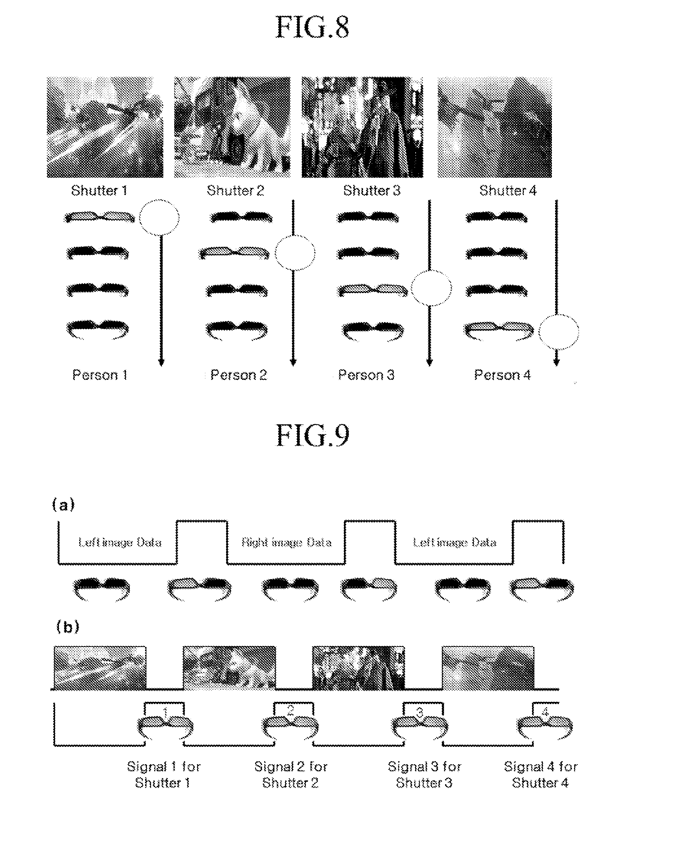

FIG. 8 is a diagram illustrating a time-division scheme and an operation scheme of shutter glasses according to an exemplary embodiment of the present invention.

Referring to FIG. 8, four persons may view different contents through the full screen of a display panel, according to an exemplary embodiment of the present invention.

FIG. 9(a) is a diagram showing an operation of existing shutter glasses and FIG. 9(b) is a diagram showing an operation of shutter glasses according to an exemplary embodiment of the present invention.

Referring to FIG. 9(a), a left-eye shutter and a right-eye shutter of the existing shutter glasses are operated through different signals. On the contrary, in the shutter glasses according to the exemplary embodiment of the present invention, a left-eye shutter and a right-eye shutter of one pair of shutter glasses may be controlled concurrently (in other words, at the same time) by using one signal. Further, one or more pairs of shutter glasses may be controlled for one image.

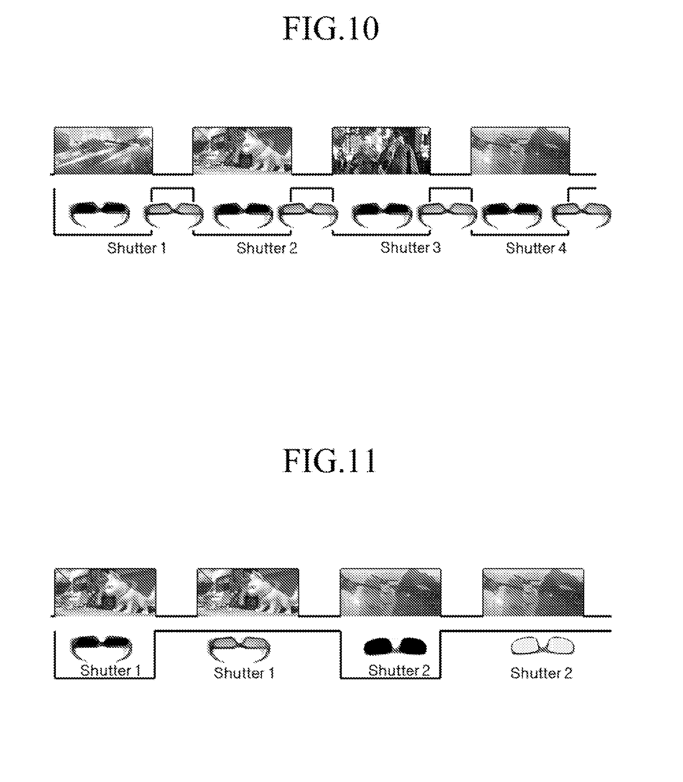

FIG. 10 is a diagram showing a scheme of time-dividing four images and an operation scheme of shutter glasses using a driving panel operating at 480 Hz.

Referring to FIG. 10, each image is viewed while driven at 120 Hz.

FIG. 11 is a diagram showing a scheme of time-dividing two images and an operation scheme of shutter glasses according to an exemplary embodiment of the present invention.

Referring to FIG. 11, no crosstalk occurs and a bright screen is viewed.

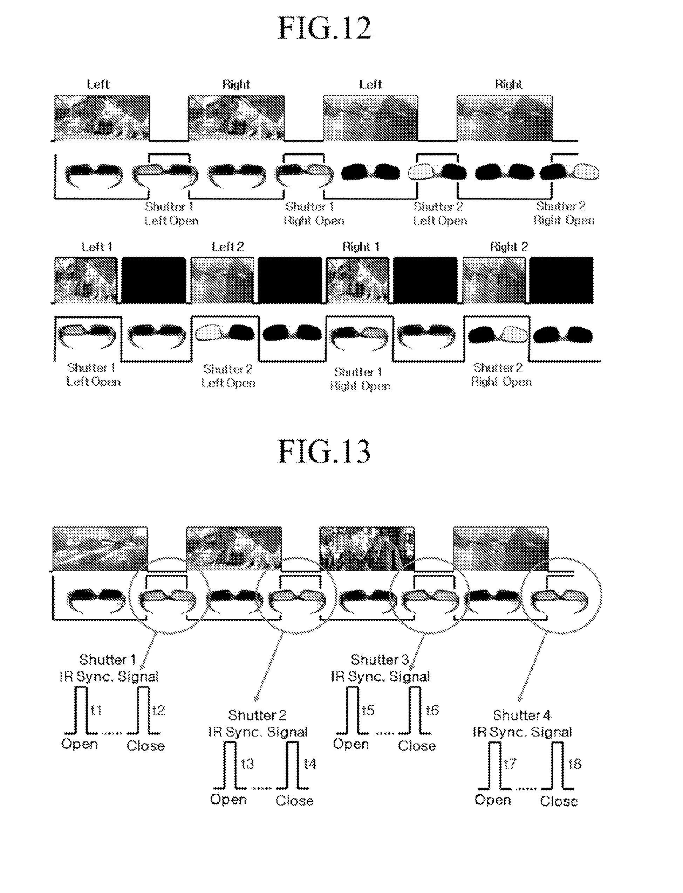

FIG. 12 is a diagram showing a scheme of time-dividing 3D contents and an operation scheme of shutter glasses using a driving panel operating at 480 Hz.

Referring to FIG. 12, two 3D contents are time-divided and displayed in one screen.

FIG. 13 is a diagram showing a time-division scheme and an operation scheme of shutter glasses according to an exemplary embodiment of the present invention.

Referring to FIG. 13, when four 2D images are driven, different synchronization signals are used to control shutter glasses. Herein, t1 to t8 represent times and values of the times t1 to t8 may be different from each other. Left and right eyes of shutter 1 may both be opened at the time t1 and the left and right eyes of the shutter 1 may both be closed at the time t2.

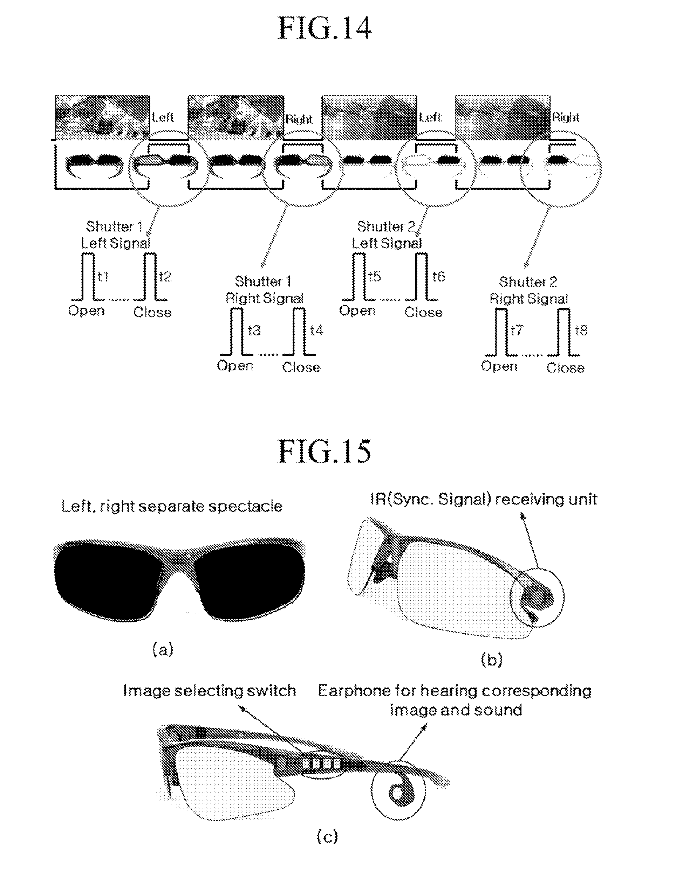

FIG. 14 is a diagram showing a time-division scheme and an operation scheme of shutter glasses according to an exemplary embodiment of the present invention.

Referring to FIG. 14, when two 3D images are driven, different synchronization signals are used to control shutter glasses. Herein, t1 to t8 represent times and values of the times t1 to t8 may be different from each other. The left eye of shutter 1 may be opened at the time t1 and the left eye of the shutter 1 may be closed at the time t2. The right eye of the shutter 1 may be opened at the time t3 and the right eye of the shutter 1 may be closed at the time t4 to view the 3D image. The images may be inputted into a 3D display panel and displayed in the order of the images arranged in FIG. 14.

FIG. 15 is a diagram showing shutter glasses according to exemplary embodiments of the present invention. The left eye and the right eye of shutter glasses (a) according to an exemplary embodiment of the present invention are separated, such that the left eye and the right eye may independently be opened and closed. In this case, the left eye and the right eye may alternately be opened and closed. Shutter glasses (shutter spectacles (b)) according to an exemplary embodiment of the present invention may include a switch or a button that allows the user to select a desired image and may further include an earphone through which the user may hear sounds (voice, audio information, songs, sound, and the like) related with the selected image. Further, shutter spectacles (c) according to an exemplary embodiment of the present invention may further include a signal transmitting unit that may transmit (send or receive) a synchronization signal corresponding to a user's selected image.

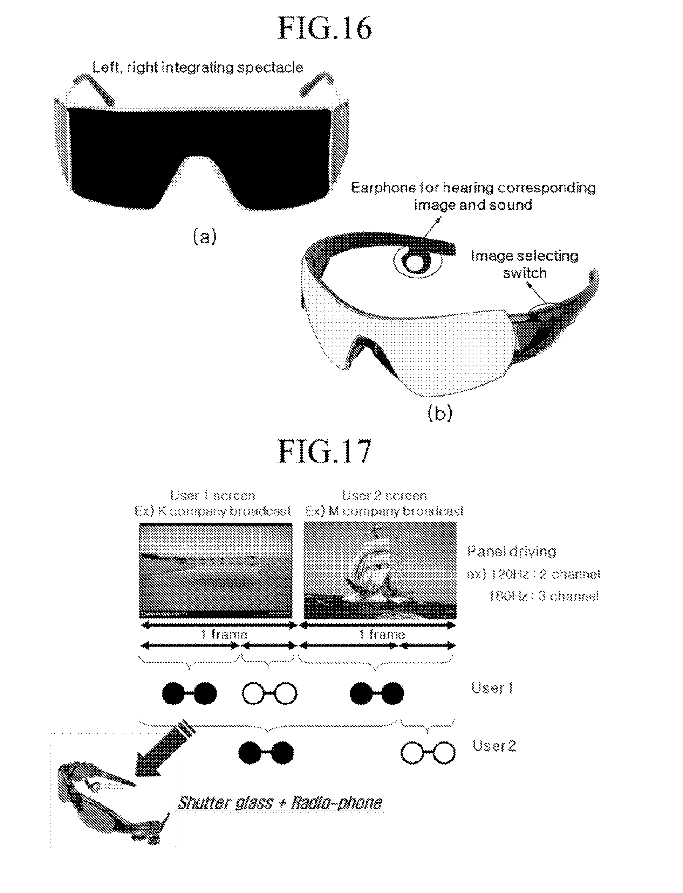

FIG. 16 is a diagram showing shutter glasses according to exemplary embodiments of the present invention. In FIG. 16, the left eye and the right eye of shutter glasses (a) according to an exemplary embodiment of the present invention are not separated from each other and may integrally be formed. In FIG. 16, the shutter glasses (shutter spectacles (b)) according to an exemplary embodiment of the present invention may include a switch or a button that allows the user to select a desired image and may further include an earphone through which the user may hear sounds (voice, audio information, songs, sound, and the like) related with the selected image. These may be included in shutter glasses (a) of FIG. 16. Further, either of the shutter spectacles in FIG. 16 may further include a signal transmitting unit that may transmit (send or receive) a synchronization signal corresponding to a user's selected image.

FIG. 17 is a diagram showing an operation scheme of a multi view using a 3D panel according to an exemplary embodiment of the present invention.

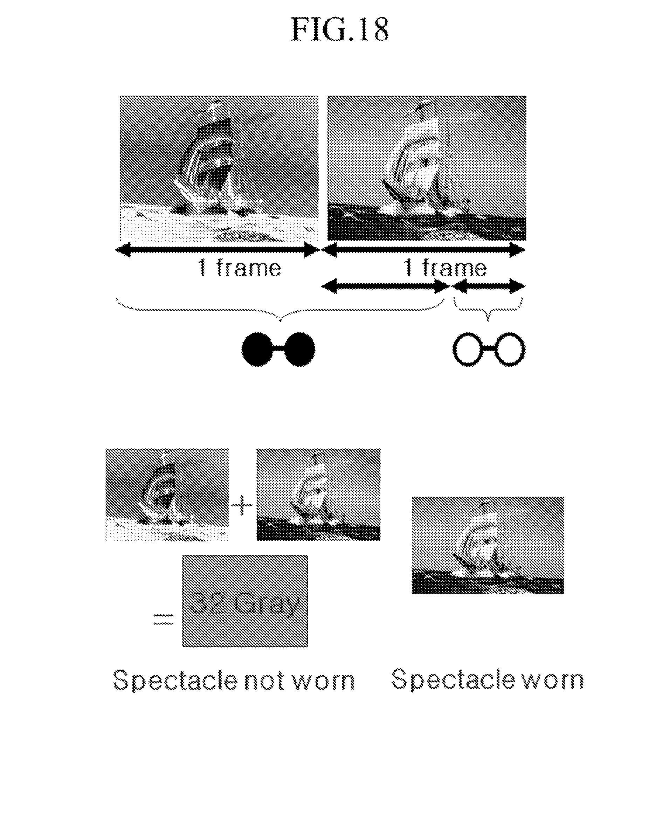

FIG. 18 is a diagram showing an operation scheme of a veil view using a 3D panel according to an exemplary embodiment of the present invention.

Referring to FIG. 18, a driving frequency of the panel may be 120 Hz. According to an exemplary embodiment of the present invention, since only a person who wears a spectacle may view an image and a person who does not wear the spectacle may view only a gray image, personal privacy and security data may be protected.

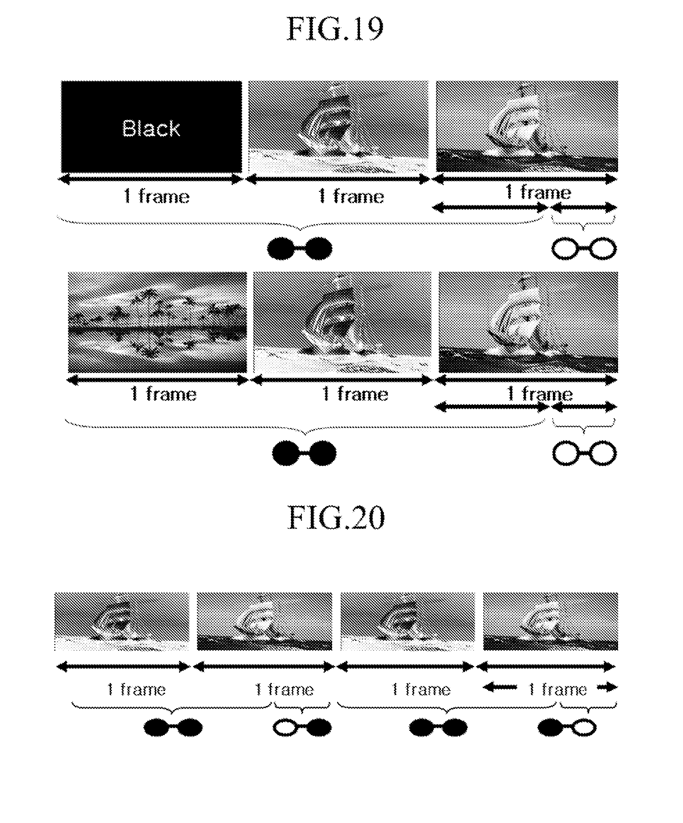

FIG. 19 is a diagram showing an operation scheme of a veil view using a 3D panel according to an exemplary embodiment of the present invention.

Referring to FIG. 19, a driving frequency of the panel may be 180 Hz.

FIG. 20 is a diagram showing a 3D operation scheme of a veil view using a 3D panel according to an exemplary embodiment of the present invention.

Referring to FIG. 20, a driving frequency of the panel may be 240 Hz and the veil view is applied to the 3D panel driving scheme. In other words, only the user may view the 3D image without showing the 3D image to other persons.

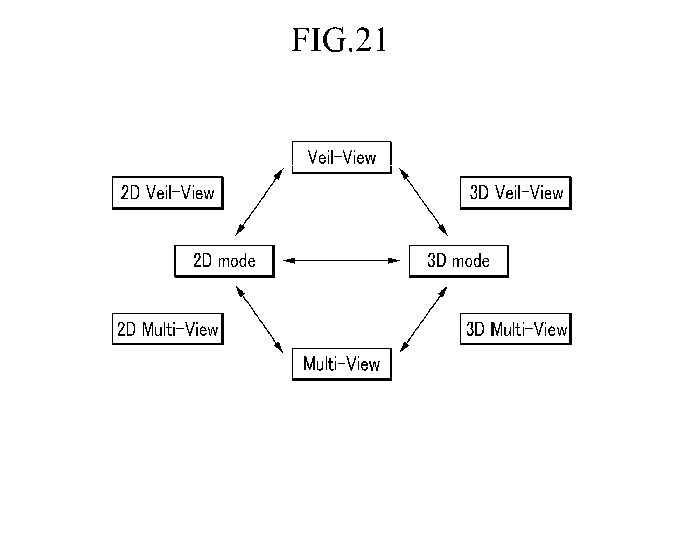

FIG. 21 is a diagram showing that a display device according to an exemplary embodiment of the present invention is switchable to various modes.

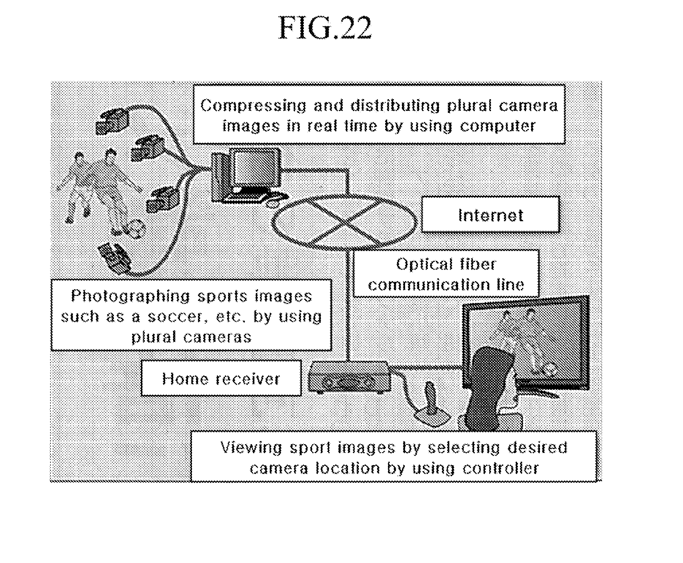

FIG. 22 is a diagram showing an example of a service using a display device according to an exemplary embodiment of the present invention.

Referring to FIG. 22, a screen of a desired angle may be viewed in multi view. For example, a person who cheers for a home team may view a view toward first base and a person who cheers for a visitor team may view a view toward third base when a baseball game is played.

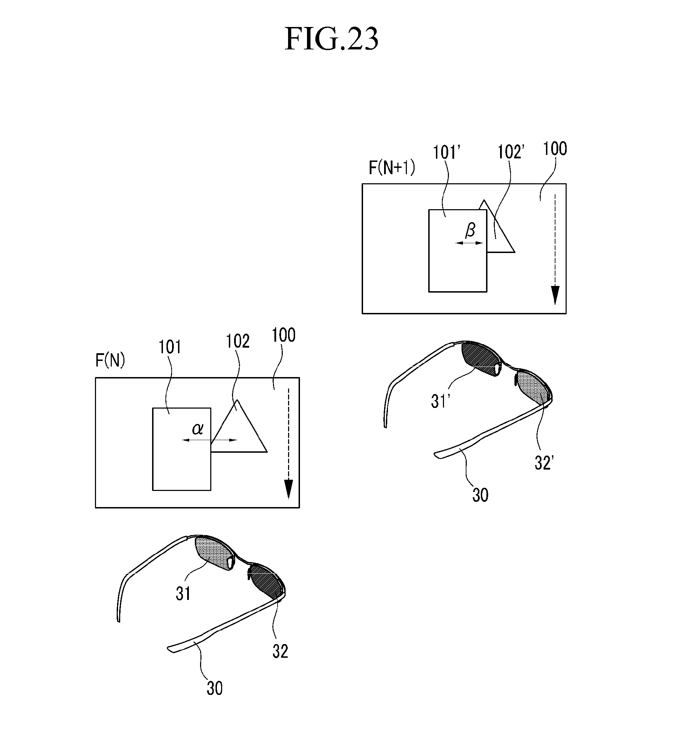

Hereinafter, a 3D image display device according to an exemplary embodiment of the present invention will be described in detail with reference to FIGS. 23 to 26.

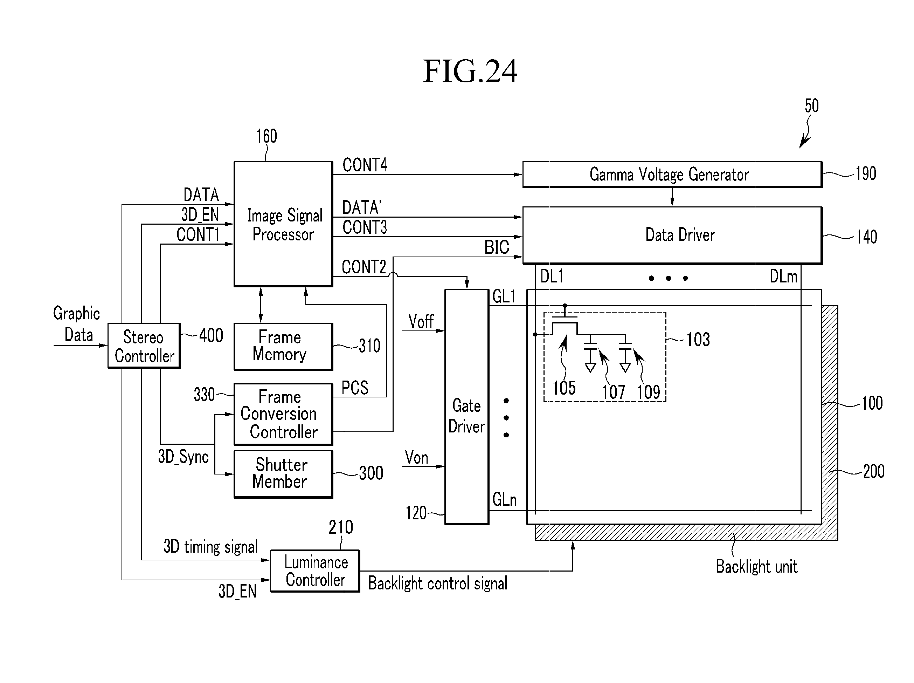

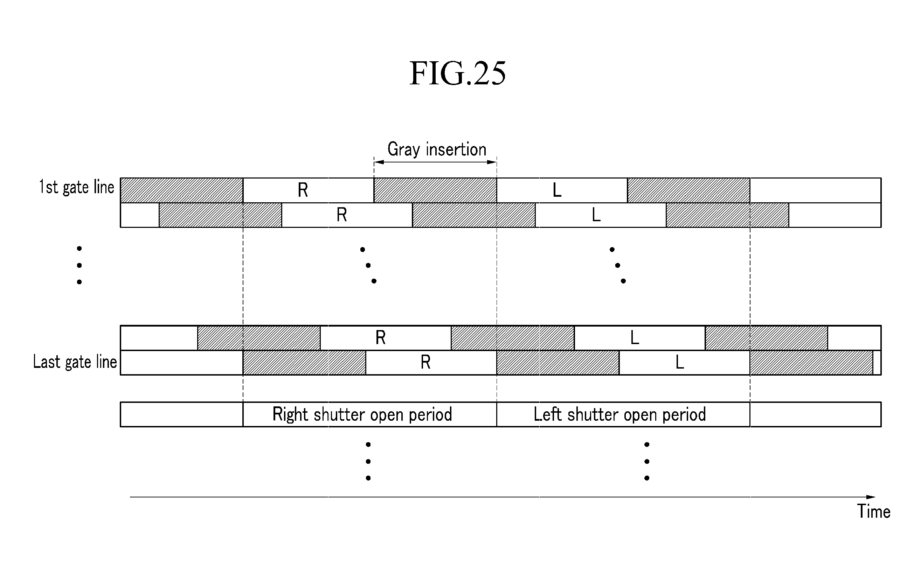

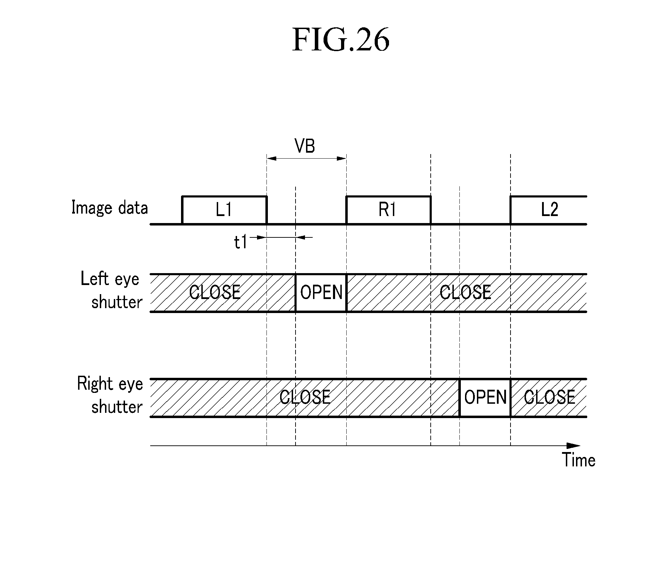

FIG. 23 is a diagram showing an operation of a 3D image display device according to an exemplary embodiment of the present invention, FIG. 24 is a block diagram showing a 3D image display device according to an exemplary embodiment of the present invention, FIG. 25 is a graph showing a signal waveform of a 3D image display device according to an exemplary embodiment of the present invention, and FIG. 26 is a graph showing a signal waveform of a 3D image display device according to an exemplary embodiment of the present invention.

The display device 100 may include a liquid crystal display, an organic light emitting display, a plasma display panel, an electrophoretic display, and the like. Hereinafter, as the display device 100, the liquid crystal display will primarily be described with reference to FIG. 23.

The display device 100 may include an upper substrate, a lower substrate, and a liquid crystal layer injected between the upper substrate and the lower substrate. The display device 100 changes an alignment direction of liquid crystals by an electric field generated between two electrodes and as a result, an image is displayed by adjusting the transmittance of light.

Gate lines GL1 to GLn, data lines DL1 to DLm, a pixel electrode, and a thin film transistor 105 connected thereto are positioned on the lower substrate. The thin film transistor 105 controls a voltage applied to the pixel electrode on the basis of signals applied to the gate lines GL1 to GLn and the data lines DL1 to DLm. The pixel electrode may be formed by a semi-transmissive pixel electrode having a transmission region and a reflection region. Further, a storage capacitor 107 may be added and the voltage applied to the pixel electrode is stored for a predetermined time. For example, one pixel 103 may include the thin film transistor 105, the storage capacitor 107, and a liquid crystal storage capacitor 109.

A black matrix, a color filter, and a common electrode may be positioned on the upper substrate which is opposite the lower substrate. At least one of the black matrix, the color filter, and the common electrode that are formed on the upper substrate may be formed on the lower substrate and in the case in which both the common electrode and the pixel electrode are formed on the lower substrate, at least one of both electrodes may be formed in the form of a linear electrode.

The liquid crystal layer may include a twisted nematic (TN) mode liquid crystal, a vertically aligned (VA) mode liquid crystal, an electrically controlled birefringence (ECB) mode liquid crystal, and the like.

A polarizer is attached to each of an outer surface of the upper substrate and an outer surface of the lower substrate. Further, a compensation film may be added between the substrate and the polarizer.

A backlight unit 200 includes a light source and an example of the light source includes a fluorescent lamp such as a cold cathode fluorescent lamp (CCFL), a light emitting diode (LED), and the like. Further, the backlight unit may further include a reflection plate, a light guide plate, a luminance enhancement film, and the like.

Referring to FIG. 24, a display apparatus 50 may include the display device 100, the backlight unit 200, a data driver 140, a gate driver 120, an image signal processor 160, a gamma voltage generator 190, a luminance controller 210, a shutter member 300, a stereo controller 400, and the like. The stereo controller 400 may transmit a 3D timing signal and a 3D enable signal 3D_EN to the luminance controller 210. The luminance controller 210 may transmit a backlight control signal to the backlight unit 200. The backlight unit 200 may be turned on or turned off by the backlight control signal through the luminance controller 210 and the stereo controller 400. The backlight control signal transmitted to the backlight unit 200 may allow the backlight unit 200 to be turned on for a predetermined time. For example, the backlight control signal transmitted to the backlight unit 200 may allow the backlight unit 200 to be turned on during a vertical blank (VB) or for a time other than the vertical blank.

The stereo controller 400 may transmit a 3D sync signal 3D_Sync to the shutter member 300 and a frame conversion controller 330. The shutter member 300 may be electrically connected with the stereo controller 400. The shutter member 300 may receive the 3D sync signal 3D_Sync by a wireless infrared communication. The shutter member 300 may operate in response to the 3D sync signal 3D_Sync or a modified 3D sync signal. The 3D sync signal 3D_Sync may include all signals that may open or close a left-eye shutter or a right-eye shutter. The 3D sync signal 3D_Sync may be described with reference to FIGS. 24 to 26 below. The frame conversion controller 330 may transmit control signals PCS and BIC to the image signal processor 160 and the data driver 140, respectively.

The stereo controller 400 may transmit display data DATA to the image signal processor 160. The image signal processor 160 may transmit various kinds of display data and various kinds of control signals to the display device 100 through the gate driver 120, the data driver 140, the gamma voltage generator 190, and the like to display an image in the display device 100. In the 3D image display apparatus 50, the display data DATA may include left-eye image data, right-eye image data, and the like. The display data DATA inputted into the display device 100 may be described with reference to FIGS. 24 to 26 below.

Meanwhile, referring to FIG. 23, the shutter member 30 may be a spectacle-type pair of shutter glasses referred to here as shutter glass 30, but is not limited thereto and may include a mechanical shutter spectacle (goggle), an optical shutter spectacle, and the like. Right-eye shutters 32 and 32' and left-eye shutters 31 and 31' of the shutter glass 30 alternately shield light in synchronization with the display device 100 at a predetermined cycle. The right-eye shutters may be in a closed state (32) or an opened state (32') and the left-eye shutters may be in an opened state (31) or a closed state (31'). For example, the left-eye shutter 31' may be in the closed state while the right-eye shutter 32' is in the opened state and on the contrary, the right-eye shutter 32 may in the closed state while the left-eye shutter 31 is in the opened state. In addition, both the left-eye shutter and the right-eye shutter may be in the opened state or in the closed state.

A shutter of the shutter glass 30 may be formed by using a technology used in the liquid crystal display, the organic light emitting display, the electrophoretic display, and the like but is not limited thereto. For example, the shutter may include two transparent conductive layers and a liquid crystal layer interposed therebetween. A polarization film may be positioned on the surface of the conductive layer. Liquid crystal materials are rotated by a voltage applied to the shutter and the shutter may be in the opened state and in the closed state by the rotation.

For example, left-eye images 101 and 102 are outputted from the display device 100 and the left-eye shutter 31 of the shutter glass 30 is in an opened state (OPEN) where light is transmitted and the right-eye shutter 32 is in a closed state (CLOSE) where light is shielded. Further, right-eye images 101' and 102' are outputted from the display device 100 and the right-eye shutter 32' of the shutter glass 30 is in the opened state (OPEN) where light is transmitted and the left-eye shutter 31' is in the closed state (CLOSE) where light is shielded. Accordingly, the left-eye image is perceived by only a left eye for a predetermined time and the right-eye image is perceived by only a right eye for a subsequent predetermined time. Consequently, a 3D image having depth perception is perceived by a person due to the difference between the left-eye image and the right-eye image.

The image perceived by the left eye is an image in which an image displayed on an N-th frame F(N), e.g., a quadrangle 101 and a triangle 102 are distant from each other by a distance α. The image perceived by the right eye is an image in which an image displayed on an N+1-th frame F(N+1), e.g., a quadrangle 101' and a triangle 102' are distant from each other by a distance β. Herein, α and β may have different values. Distance perceptions of the triangle and the quadrangle are different from each other due to different distances between the images perceived by both eyes. Therefore, it is perceived that the triangle is distant behind the quadrangle to feel the depth perception. By adjusting the distances α and β between the triangle and the quadrangle, it is possible to adjust a distance (depth perception) between both objects that are distant from each other.

Referring to FIG. 23, an arrow direction shown in the display device 100 represents an order of applying a gate-on voltage to a plurality of gate lines that extend substantially in a column direction. In other words, a gate-on signal may be applied from an upper gate line to a lower gate line of the display device 100 in sequence.

For example, the display device 100 may display the left-eye images 101 and 102 as described below. The gate-on voltage is sequentially provided to the gate lines to apply the data voltage to the pixel electrode through a thin film transistor connected to the corresponding gate line. In this case, the applied data voltage is the data voltage (hereinafter, referred to as left-eye data voltage) for describing the left-eye images 101 and 102 and the applied left-eye data voltage may be stored for a predetermined time by the storage capacitor of the pixel. Further, in the same manner as above, the applied data voltage is the data voltage (hereinafter, referred to as right-eye data voltage) for describing the right-eye images 101' and 102' and the applied right-eye data voltage may be stored for a predetermined time by the storage capacitor.

As one example of the signal waveform of the 3D image display apparatus 50, referring to FIG. 25, the gate-on signal is sequentially applied from a first gate line to a last gate line, such that right-eye images R may be sequentially applied to a plurality of pixels connected to corresponding gate lines or left-eye images L may be sequentially applied to a plurality of pixels connected to the corresponding gate lines. Herein, while the right-eye images R are sequentially applied to the plurality of pixels connected to the corresponding gate lines, the right-eye shutter may be in the opened state and the left-eye shutter may be in the closed state. Herein, while the left-eye images L are sequentially applied to the plurality of pixels connected to the corresponding gate lines, the left-eye shutter may be in the opened state and the right-eye shutter may be in the closed state.

An image having a predetermined gray value may be inputted between an input period of the right-eye image R and an input period of the left-eye image L. This may be referred to as gray insertion. For example, after the right-eye image R is displayed in the display device 100, images of black, white, and the like are displayed on the full screen of the display device 100 and thereafter, the left-eye image L may be displayed. Herein, the predetermined gray value is not limited to black or white and may have various values. When the image having the predetermined gray value is inserted into the full screen of the display device 100, crosstalk between the right-eye image and the left-eye image may be prevented.

As another example of the signal waveform of the 3D image display apparatus 50, referring to FIG. 26, left-eye image data L1 and L2 and right-eye image data R1 are inputted into the display device 100. Herein, the image data represents a signal described in a digital or analog format to output an image (picture or image) to the display device 100. All the left-eye image data are inputted and before the right-eye image data is inputted or all the right-eye image data are inputted and before the left-eye image data is inputted, a time when the image data is not inputted is occurs. This is referred to as a vertical bank (VB). Any one of the left-eye shutters 31 and 31' and the right-eye shutters 32 and 32' of the shutter glass 30 is changed to the closed state (CLOSE) and the other maintains the opened state (OPEN) for at least part of the time of the VB. In FIG. 26, parts of the left-eye shutter and the right-eye shutter marked with a deviant crease line mean the closed state (CLOSE). In a period where the left-eye image data or the right-eye image data is inputted, both the left-eye shutters 31 and 31' and the right-eye shutters 32 and 32' of the shutter glass 30 may be in the closed state.

In an exemplary embodiment of the present invention, the backlight unit 200 is turned on in the VB period displayed in FIG. 26 and the backlight unit 200 may be turned off in periods such as L1, R1, L2, and the like in which the rest of the images are lighted by using the backlight unit 200 connected to the display device 100. In this case, both the left and right eyes of the shutter spectacle 30 are opened during the period of L1 and only the left-eye shutter may be closed during the VB period. Further, both the left and right eyes are opened during the period of R1 and only the right-eye shutter may be closed during the VB period. Even while the rest of the images are input, the 3D image may be formed using the backlight unit 200 and the shutter spectacle 30 by operating the left and right eyes in the same order as described above.

When a predetermined time t1 elapses from the time when the inputting of the left-eye image data or the right-eye image data is completed, the left-eye shutters 31 and 31' or the right-eye shutters 32 and 32' may be changed from the closed state to the opened state. t1 may be determined based on a response time of the liquid crystals of the display device 100. For example, due to the response time of the liquid crystals, a predetermined time is required until the right-eye images 101' and 102' are outputted after the inputting of the right-eye image data R1 is completed. Accordingly, after the time t1 elapses, the complete right-eye images 101' and 102' may be viewed by opening the right-eye shutters 32 and 32' and crosstalk due to the previous image may be prevented.

While the present invention has been described in detail with reference to the exemplary embodiments, those skilled in the art will appreciate that various modifications and substitutions can be made thereto without departing from the spirit and scope of the present invention as set forth in the appended claims.

## Claims

1. A three dimensional (3D) image display device, comprising:
a display unit receiving a time-division configured 3D image, the time division configured 3D image including a plurality of two-dimensional (2D) images spaced apart over time; and
a synchronization unit identifying first images in the plurality of 2D images to be viewed with a first viewer and second images in the plurality of 2D images to be viewed with a second viewer, and generating a synchronization signal based on the first and second images,
wherein the display unit displays the plurality of 2D images on a full screen of the display unit.

2. The device of claim 1, wherein the first and second images each comprise a left-eye image and a right-eye image constituting a 3D image when viewed with their respective viewer and the synchronization signal is generated based on the left-eye image and the right-eye image.

3. The device of claim 1, wherein the time-division configured 3D image comprises a complementary color image or a dummy image corresponding to at least one of the plurality of images.

4. The device of claim 3, further comprising:
first and second shutter members, wherein the synchronization unit transmits the synchronization signal to the shutter members.

5. The device of claim 4, wherein at least one of the shutter members comprises a left-eye shutter and a right-eye shutter, and the synchronization signal is generated to simultaneously close both the left-eye shutter and the right-eye shutter when the complementary color image or the dummy image is displayed on the full screen of the display unit.

6. The device of claim 1, further comprising:
first and second shutter members, wherein the synchronization unit transmits the synchronization signal to the shutter members.

7. The device of claim 6, wherein at least one of the shutter members comprises a left-eye shutter and a right-eye shutter and the synchronization signal is generated to open any one of the left-eye shutter and the right-eye shutter and close the other one.

8. The device of claim 7, wherein:
the at least one shutter member comprises at least one of an earphone and a switch selecting the first images or second images for viewing.

9. The device of claim 6, wherein at least one of the shutter members comprises a left-eye shutter and a right-eye shutter and the synchronization signal is generated to simultaneously open both the left-eye shutter and the right-eye shutter or to simultaneously close both the left-eye shutter and the right-eye shutter.

10. The device of claim 9, wherein the shutter member is a left-eye and right-eye integrated pair of glasses.

11. The device of claim 9, wherein the at least one shutter member comprises at least one of an earphone and a switch selecting the first image or second images for viewing.

12. A three dimensional (3D) image display device, comprising:
a display unit displaying two dimensional (2D) video content or 3D video content, each of the video contents comprising a plurality of images; and
a synchronization unit distinguishing images of the video contents from each other based on a configuration of the video content and generating a synchronization signal on the basis of this distinction,
wherein each of the video contents comprise a complementary color image or a dummy image corresponding to one of the plurality of images.

13. The device of claim 12, wherein the synchronization unit transmits the synchronization signal to two or more shutter members.

14. The device of claim 13, wherein at least one of the shutter members comprises a left-eye shutter and a right-eye shutter and the synchronization signal is generated to simlutaneously close both the left-eye shutter and the right-eye shutter when the complementary color image or the dummy image is displayed on the display unit.

15. A method for driving a three dimensional (3D) image display device, comprising:
time-dividing two dimensional (2D) video content and 3D video content such that images of the 2D video content are divided over a predetermined time and images of the 3D video content are divided over the predetermined time; identifying images of the 2D video content to be viewed by a first viewer and images of the 2D video content to be viewed by a second viewer;
identifying images of the 3D video content to be viewed by the first viewer and images of the 3D video content to be viewed by the second viewer;
generating a synchronization signal based on the identitified images; and
alternately displaying the identified images on a full screen of a display device.
